# EUROPEAN PATENT SPECIFICATION

(11) **EP 0 575 817 B1**
(45) Date of publication and mention of the grant of the patent: **27.01.1999**
(21) Application number: 93109252.2
(22) Date of filing: 09.06.1993
(51) Int. Cl.: G06F 9/455

(54) **Control processor, particularly for telecommunication applications, equipment for emulating it and method of carrying out an emulation**
Steuerungsprozessor, insbesondere für Telekommunikationsanwendungen, Anlage für seine Emulierung und Verfahren zur Durchführung einer Emulation
Processeur de commande, spécialement pour des applications de télécommunication, dispositif pour l'émuler et méthode pour faire une émulation

(30) Priority: 19.06.1992 IT MI921513
(43) Date of publication of application: 29.12.1993
(73) Proprietor: ALCATEL, 75008 Paris (FR)
(72) Inventor: Lisca, Lorenzo, I-20131 Milano (IT)
(74) Representative: Pohl, Herbert, Dipl.-Ing.

(56) References cited:
- US-A- 4 926 323
- US-A- 5 077 657

## Description

The present invention relates to a control processor of a system, particularly for telecommunication applications, to an equipment for emulating it and to a method for carrying out an emulation.

In the field of control systems the use of programmed logic is nowadays very common while in the past the wired logic was much more diffuse. The advantages of the programmed logic are well known: versatility, changeability, cost.

At present when facing the design of a control system, e.g. an electronic system like one of the cards forming part of an exchange, first of all one selects a processor (a microprocessor or a DSP) among the great many ones available on the market so that it responds as far as possible to his needs, connects a program memory, a data memory and some sparse logic (generally input and output ports) to it, and finally prepares the program to be loaded into the program memory.

In principle the program must read the content of a number of input ports, carry out calculations on such content, prepare suitable values and finally write such values into a number of output ports.

As well known the input ports provide information about the status of the system being connected to special electric elements capable of this, and the output ports are able to modify the status of the system also they being connected to special electric elements able to do this.

The effort of realizing such a kind of control system is somewhat limited; much less simple and fast is the test for such system, realized in the final analysis through processor emulators.
If, on the other hand, the control must be realized in real time on system having extremely small time constants, like e.g. the boards forming part of an exchange, it is not easy to assure a control which is quick enough and reliable; moreover the emulation is practically impossible since commercial emulators are not intrinsically designed to operate in real time: indeed they stop the normal operation of the processor according to emulation requirements.

It is an object of the present invention to overcome the drawbacks of the known art and, more particularly, to provide a control system having an architecture not too much complicated and therefore not too much expensive, capable of controlling in real time, easily and reliably systems having small time constants, and such as to be likewise tested easily and reliably during its normal operation and without interferring appreciably with it, so as to realize effectively the operation test of the control system in real time.

This object is achieved through the control processor having the characteristics set forth in claim 1, through the equipment for emulating it having the characteristics set forth in claim 10, and through the method of realizing an emulation as set forth in claim 14. Further advantageous aspects of the present invention are set forth in the subclaims.

By realizing a processor whose set of instructions depends on the control to be realized and in which the control instruction carried out each time, is read not by the program memory as usual, but by the input registers that indicate the status of the system, a remarkable increase in speed and also in reliability is obtained; moreover by providing the processor also with emulation instructions besides control instructions and leaving to it their handling there is not any appreciable interference on its operation and therefore a high reliability in emulation is obtained.

Even if apparently the effort to realize such a processor may seem - at least from the design point of view - high, indeed, when passing on the realisation of the entire control system, the indirect economical advantages are high: in fact, often commercial processors, particularly if they are of recent production, are poorly tested and not much reliable and often design problems arise during their use; in such instances, e.g., one may either wait until the manufacturer overcomes the problem, or change type of processor, or try to do the best one can through an impromptu solution. In the instance of the present processor every problem can be overcome very often by changing few lines of firmware. The same remarks apply to the emulator but perhaps the situation is even worse since inside the latter the same processor to be emulated is used.

At any rate, in order to reduce the design effort it is very advantageous to use the bit slice processor design technique which is exhaustively treated in the book "BIT-SLICE MICROPROCESSOR DESIGN" by J. Mick and J. Brick, McGraw Hill, 1980.

The present invention will become more apparent from the following description of a not limiting embodiment taken in conjunction with the attached drawings in which;
- Fig. 1: represents a block diagram of the control processor according to the present invention,
- Fig. 2: represents a more detailed block diagram of the control processor of Fig. 1,
- Fig. 3: represents a block diagram of the equipment according to the present invention connected to a terminal which controls it and to a board containing a processor to be emulated, and
- Figs. 4 and 5: represent two detailed circuit diagrams of possible realisations of two parts of complement circuitry comprised in the equipment of fig. 3 and of how they are connected to the discrete circuitry also comprised in the equipment of fig. 3.

In the following reference will be made to the control of operation of one of the boards which constitutes an exchange, but the subject of the present invention can be applied to any electrical system and, still more in general, to any system from which it is possible to receive information about its status through electric signals and to affect its status in a direct manner by sending electric signals.

In the specific case which will be illustrated, electric signals are of a digital kind, the control system and the system to be controlled being both digital systems; should the system to be controlled operate with analog signals, as well known, it is very easy to convert digital signals into analog ones and viceversa analog signals into digital ones, respectively through D/A and A/D converters.

The following description will start from the assumption that the system already contains inside it first electric elements from which it is possible to receive digital information about its status (which, in general, are input ports), and second electric elements capable of receiving digital information and capable of affecting in a direct manner its status (which, in general, are output ports).

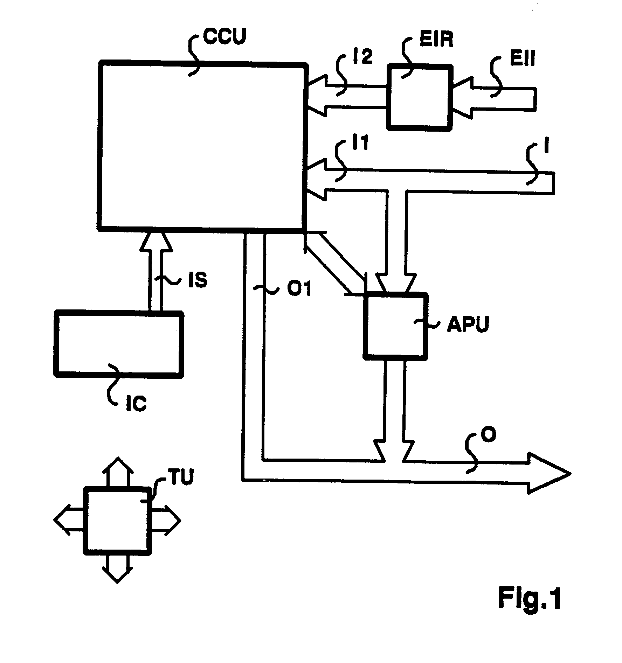

In fig. 1 there is shown a block diagram of the control processor according to the present invention.

The processor is provided with inputs I connected to first electric elements (not shown in fig. 1) and outputs O connected to second electric elements (not shown in fig. 1); it comprises a computer control unit CCU having first inputs I1 connected to inputs I of the processor and outputs O1 connected to outputs O of the processor. Computer control unit CCU receives, through such first inputs I1, instructions to be carried out by it hereinafter referred to as "control instructions".

In addition to computer control unit CCU, generally the processor needs to include an arithmetic processing unit APU intended as a group comprising at least an ALU (Arithmetic Logic Unit), a set of registers to store operands and results of operations, and some circuitry for coordinating the various elements: there are several devices in the Advanced Micro Devices Am 2900 family suitable for the purpose (Am 201, Am 2902, Am 2903, ....,). The need of using an arithmetic processing unit exists, of course, if the control to be realized contemplates the execution of logic-arithmetic operations: in particularly simple cases this does not occur.

Unit APU needs data inputs and outputs, control inputs and outputs. Data inputs are connected to inputs I of the processor: depending on needs, only some or all the lines constituting inputs I will be also data input lines of unit APU. Data outputs are connected to first outputs O1 of unit CCU and together form the outputs O of the processor: depending on circumstances some lines of the outputs of unit APU will be electrically connected with some lines of outputs O1 of unit CCU, while others will remain independent. The control inputs are connected to unit CCU, which transmits through them arithmetic processing commands (loading of a value from data inputs in a register, data transfer between two registers, emission, through data outputs, of a value contained in a register, sum of values contained in two registers, NOT operation on the content of a register, SHIFT of the content of a register, ....). The control outputs are connected to unit CCU which receives through the same information concerning the status of unit APU (operation in progress, result of an operation carried out, result of a test carried out, ...).

When time requirements are particularly stringent it becomes very important to be able to become aware of asynchronous events as soon as they occur; for this reason in these circumstances it is advisable to see that unit CCU is provided with interrupt inputs IS; in general they are few (one, two or three). In order to free unit CCU from the burden of decoding the interrupt it is advantageous to put an interrupt controller IC before inputs IS: there are several devices in the Am 2900 family of Advanced Micro Devices suitable for the purpose (Am 2913, Am 2914).

Naturally all this circuitry requires suitable clock signals, as well as all synchronous logic circuits: hence a suitable timing unit TU must be provided inside the processor. Finally the circuit feeding is not to be neglected even if, in general, it is not a problem also with respect to existing control systems.

Before describing unit CCU in more detail, it is useful to say in advance that, in order to realize an effective emulation of the processor in accordance with the present invention, it is necessary to provide unit CCU with second inputs I2 and an emulation instruction register EIR, inside the processor, having an input EII through which it receives emulation instructions and having outputs connected to said second inputs I2. Unit CCU enables in a mutually exclusive way the first I1 and second I2 inputs and in this way carries out, with criteria that will be explained hereinafter, both control instructions and emulation instructions.

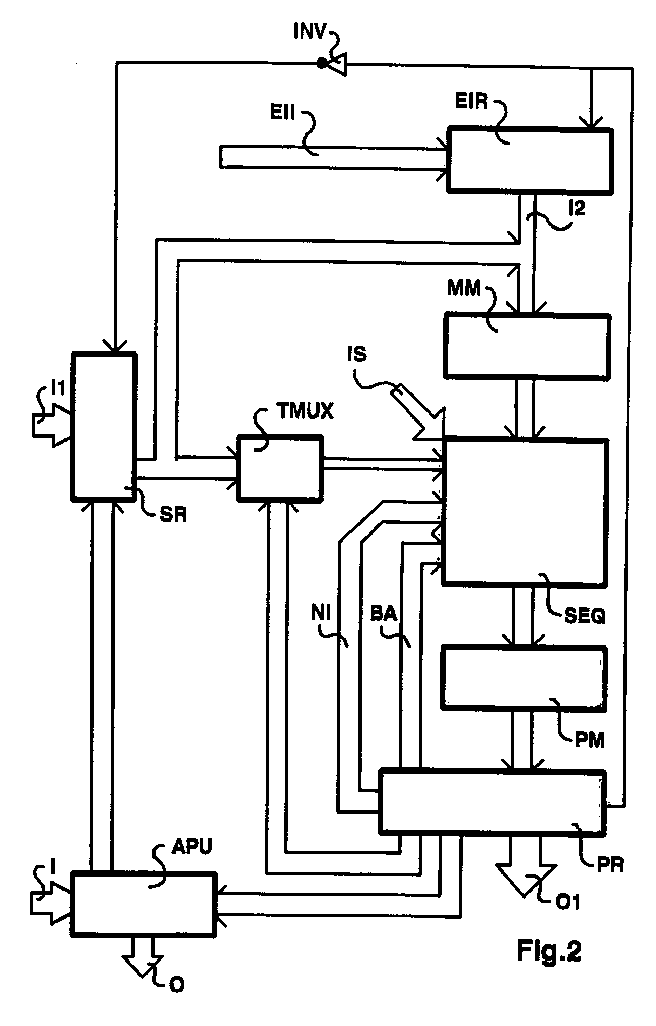

Fig. 2 shows a more detailed block diagram of the control processor of fig. 1. Although such diagram is similar to that one of a conventional processor realized through bit-slices, it differs from the latter in a conceptually substantial manner since there is not any register which has only an instruction register function. Every detail relative to blocks included in the diagram may be learned anyway from e.g. the above-mentioned book and relative DATA-BOOKS of AMD (Advanced Micro Devices).

Unit CCU, shown inter alia in fig. 2, comprises:
a) a status register SR having inputs connected to first inputs I1 of computer control unit CCU,
b) a mapping memory MM, having address inputs connected to the outputs of said status register SR,
c) a sequencer SEQ, having first inputs connected to data outputs of the mapping memory MM,
d) a microprogram memory PM, having address inputs connected to the outputs of the sequencer SEQ, and
e) a pipeline register PR, having inputs connected to data outputs of the microprogram memory PM, and having first outputs connected to outputs O1 of the computer control unit CCU.

The heart of this structure is the sequencer SEQ (e.g. realisable through AM2910 of AMD).

The control instruction to be executed passes from first inputs I1 of unit CCU to status register SR; such information is used for addressing memory MM; at its data output there is a binary value that represents the address of the subroutine contained in the memory PM, which must be executed by sequencer SEQ in correspondence with the particular status of the system under control; the execution of this subroutine causes the generation of suitable values towards the outputs O1 of unit CCU from pipeline register PR.

If, as said, there is the need of using unit APU, the status register SR must receive at the input the control outputs of unit APU and the pipeline register PR must have second outputs connected to the control inputs of unit APU.

The structure as described allows the microprogram loaded into memory PM to carry out only very simple instructions. It is very common that one desires to execute conditioned and not conditioned jumps, subroutine calls and returns, etc.; in this instance such structure must be completed by adding a multiplexer TMUX for test conditions having data inputs connected to the outputs of the status register SR and select inputs connected to third outputs of the pipeline register PR, and having at least an output connected to second inputs of the sequencer SEQ, and by providing sequencer SEQ with third inputs connected to fourth outputs of the pipeline register PR through connections NI and BA.

Multiplexer TMUX selects among several status bits contained in the status register SR, the one that is intended to be tested through select inputs and sends it to sequencer SEQ. Connections NI and BA provide sequencer SEQ with information relative to sequence control and, more specifically, connection NI establishes if sequencer SEQ should proceed with the normal sequence of operations, it should execute a conditioned jump, an unconditioned jump, ... while connection BA establishes the address of memory PM in which next instruction to be carried out by sequencer SEQ is found.

If there is the need of using the interrupt inputs IS, these must be obviously connected to fourth inputs of sequencer SEQ.

Therefore it is clear that the control is carried out according to the content of memory PM that will have a number of words connected with the complexity of the algorithm that realizes the control and also of the system to be controlled, of course. The dimension of its word, on the contrary, will be basically connected with the output lines comprised in outputs O1 and will depend on the particular application: generally such dimension is considerable: from 64 to 128 bits. The pipeline register PR must necessarily have the same word dimension.

By selecting among, e.g., components of the Am 2900 family, the variation of such parameters is very simple, and every good technician will find the most suitable choice to his needs.

Before starting the description of the equipment in accordance with the present invention, it is to be pointed out that the outputs of the emulation instruction register EIR and of the status register SR are connected together and fed to the input of the mapping memory MM. If one desires to avoid that memory MM is reached at the same time by emulation instructions and control instructions, a possible solution is to see that the outputs of these two registers are enabled in a mutually exclusive way: for instance one of the output lines of the pipeline register PR may be picked up and used in a not-form, through inverter INV, as enabling signal of register SR and in a not-not-form as enabling signal of register EIR, as shown in fig. 2. In the opposite instance, not shown in fig. 2, there is, of course, the possibility that the outputs of register EIR and of register SR arrive in parallel at memory MM and that both sequencer SEQ and the microprogram contained in memory PM are pre-arranged for carrying out at the same time both emulation instructions and control instruction.

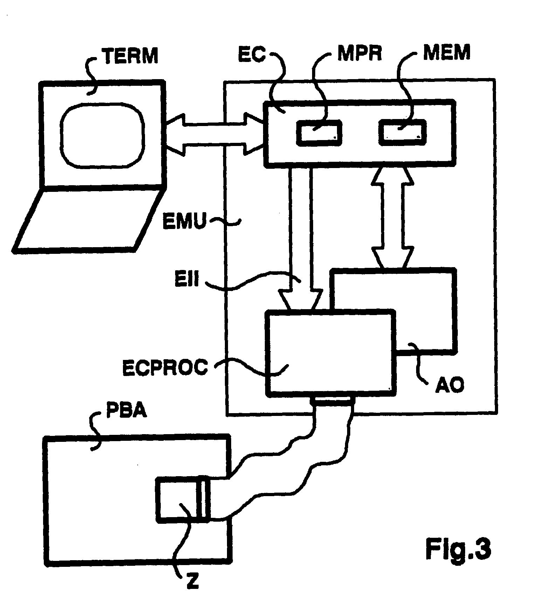

Fig. 3 shows a block diagram of the equipment EMU in accordance with the present invention connected to a terminal TERM controlling it and to a board PBA containing a processor to be emulated; the processor is removed from its socket Z and equipment EMU is connected to said socket Z. It is well known to those skilled in the art how it happens, in general, the carrying out of the test through emulator: briefly speaking it is a matter of controlling how the status of the processor, represented by the content of its registers, evolves during execution, in the special case of the control to be realized; the operator that carries out the test sends, through terminal TERM, emulation commands (value extraction from a certain register, value loading into a certain register, processor blocking under a determined condition, step-by-step execution, ...) and receives the results of said emulation commands generally in the form of displays on the same terminal TERM.

Equipment EMU, in accordance with the present invention, comprises:
a) an emulation controller EC connected to terminal TERM, receiving emulation command from it and sending it results of said commands,
b) a discrete circuitry ECPROC having the structure of the processor as described above, i.e. comprising at least the emulation instruction register, and receiving from the emulation controller EC emulation instructions through input EII of the emulation instruction register EIR, and
c) a complement circuitry AO, receiving/sending from/to said emulation controller EC input/output emulation data, manifoldly and strictly connected to the discrete circuitry ECPROC.

The emulation controller EC has the very important function of converting the high level emulation commands into one or, much more frequently, a series of emulation instructions suitable for the processor, and also the function of preparing the output emulation data towards the circuitry AO and of receiving and processing the input emulation data from circuitry AO. Such controller can be advantageously and easily realized through a microprocessor MPR and a data and program memory MEM and, of course, it must be provided with suitable interfaces towards terminal TERM, circuitry ECPROC and circuitry AO.

In order to detail better the structure of circuitry AO it is advisable to point out that pipeline register PR contained in the processor subject of the present invention, at least for emulation purposes, must comply with certain simple features. Such register is, like all others, constituted by a plurality of flip-flops each receiving at the input a binary signal and generating at the output a corresponding binary signal and moreover it is provided with an input enabling its output.

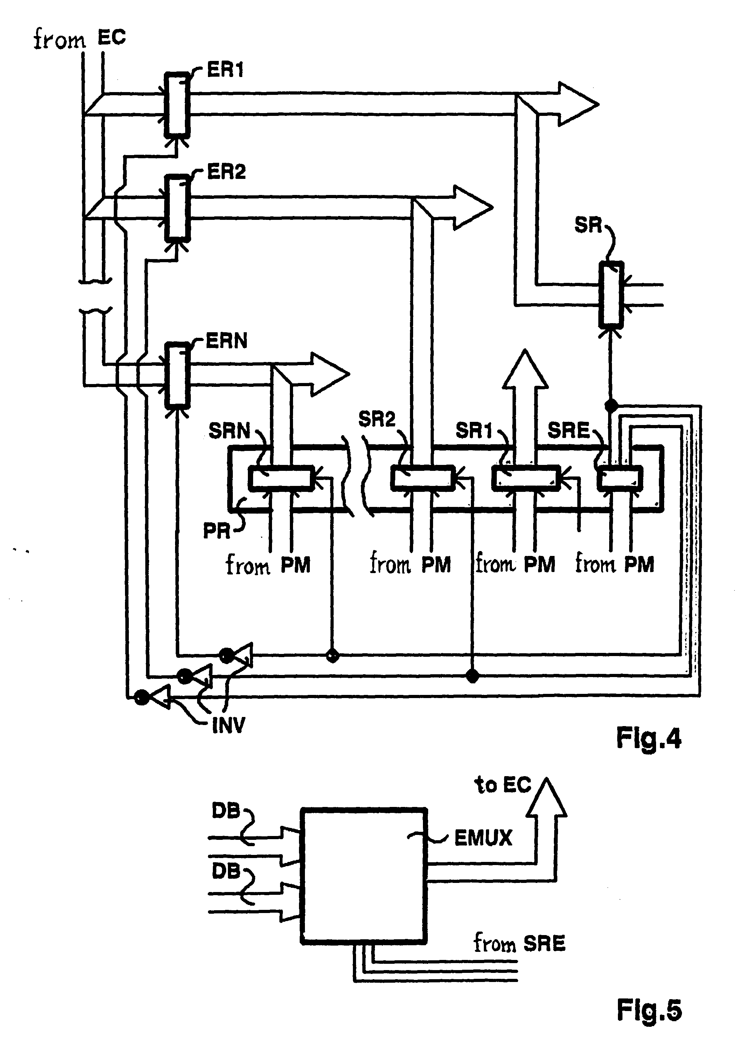

Fig. 4 illustrates that, depending on the destination of the various output binary signals, the flip-flops are grouped so as to form subregisters SR1, SR2, ...., SRN; all flip-flops belonging to the same subregister have their enabling inputs connected together, in general the set of outputs of a subregister is provided at the input of a special block of the processor itself, e.g. of unit APU, of multiplexer TMUX, etc. In addition an emulation subregister SRE must be provided.

Circuitry AO comprises at least an emulation register ER1 receiving at the input said emulation input data from the emulation controller EC; the outputs of an electrical element interior or exterior to the processor (the status register SR in the example of fig. 4) are connected with the outputs of register ER1 and are enabled, in a mutually exclusive way, by one of the outputs of the emulation subregister SRE.

Circuitry AO comprises, in addition or in alternative, at least another emulation register ER2 receiving at the input said input emulation data from emulation controller EC; the outputs of at least one of data subregisters, subregister SR2 in the example of fig. 4, are connected with outputs of register ER2 and are enabled, in a mutually exclusive way, by one of the outputs of the emulation subregister SRE.

The mutual exclusion can be simply obtained by using the same electric signal, in a natural form and in a not-form through inverters INV, for enabling.

Naturally, the emulation registers comprised in circuitry AO can be numerous; in fig. 4 they are N: from ER1 to ERN. In this way during emulation it is possible to make any point of the circuit forming the processor assume any binary value and observe afterwards the behaviour of the processor.

Having thus illustrated how it is possible to force binary values inside the processor, it is necessary now to describe how it is possible to observe the behaviour of the processor.

As it will be seen from fig. 5, to this end it is necessary to include at least one emulation multiplexer EMUX in circuitry AO, receiving at the input a plurality of data busses DB and sending said emulation output data to said emulation controller EC. The selection of data to be sent is realized by said emulation multiplexer EMUX according to some of the outputs of emulation subregister SRE. Such data busses DB are simply set of lines connected to points of particular interest of the circuit that constitutes the processor.

Since the control, inside the processor, of operations connected with emulation occurs thanks to signal outcoming from emulation subregister SRE, it is determined by the content of the various words selected by sequencer SEQ inside memory PM.

From the conceptual point of view the operation of the processor is independent of the fact that it is carrying out control, emulation or both: in fact the instruction addresses a cell inside memory PM of the subroutine that realizes the execution of such instruction; sequencer SEQ carries out the subroutine by transferring in sequence into register PR the words contained in the memory PM starting from such address up to the end of the subroutine. It is then the content of register PM that determines the whole operation of the processor in every step of it.

It remains to be seen how to realize an emulation, in particular by using the above described equipment.

During the normal operation of the processor emulation instructions are loaded by the emulation controller EC into emulation instruction register EIR without stopping the operation itself.

The processor from time to time checks the presence of emulation instructions in said register or it may be contemplated that it is alerted of the presence of emulation instructions in said register through the sending of an interrupt signal by the emulation controller itself.

The processor carries out said emulation instructions when its normal operation allows it, e.g. when according to any criterion it considers that the system to be checked may wait, or while it performs its normal operation.

## Claims

1. Control processor for a system, particularly for telecommunication applications, having inputs (I) connected to first electric elements indicating the status of said system and outputs (0) connected to second electric elements able to modify the status of said system, characterized in that it comprises a computer control unit (CCU) having first inputs (11) and outputs (01) respectively connected to said inputs (I) and outputs (0) of said processor, and in that said first inputs (11) provide said computer control unit (CCU) with control instructions to be carried out by the latter.

2. Control processor according to claim 1, characterized in that it further comprises an arithmetic processing unit (APU) having data inputs and data outputs respectively connected to said inputs (1) and outputs (0) of said processor, having control inputs and control outputs connected to said computer control unit (CCU), receiving from said computer control unit (CCU) arithmetic processing commands, and sending to the same unit information concerning its own status.

3. Control processor according to claim 1, characterized in that it further comprises an interrupt controller (IC) with outputs connected to interrupt inputs (IS) of said computer control unit (CCU).

4. Control processor according to claim 1, characterized in that it further comprises an emulation instruction register (EIR), having an input (Ell) designed to receive emulation instructions, and having outputs connected to second inputs (12) of said computer control unit (CCU), and in that said computer control unit (CCU) enables in a mutually exclusive way said first (l1) and said second (12) inputs.

5. Control processor according to claim 1, characterized in that said computer control unit comprises:
a) a status register (SR) having inputs connected to said first inputs (l1) of said computer control unit (CCU),
b) a mapping memory (MM), having address inputs connected to the outputs of said status register (SR),
c) a sequencer (SEQ), having first inputs connected to the data outputs of said mapping memory (MM),
d) a microprogram memory (PM), having address inputs connected to the outputs of said sequencer (SEQ), and
e) a pipeline register (PR), having inputs connected to data outputs of said microprogram memory (PM), and having first outputs connected to said outputs (01) of said computer control unit (CCU).

6. Control processor according to claims 2 and 5, characterized in that said status register (SR) receives at the input said control outputs of said arithmetic processing unit (APU), and that said pipeline register (PR) has second outputs connected to said control inputs of said arithmetic processing unit (APU).

7. Control processor according to claim 5, characterized in that said computer control unit (CCU) further comprises a test condition multiplexer (TMUX) having data inputs connected to the outputs of said status register (SR) and select inputs connected to third outputs of said pipeline register (PR), and having at least one output connected to second inputs of said sequencer (SEQ), and in that said sequencer(SEQ) has third inputs, connected to fourth outputs of said pipeline register (PR), for receiving information (NI, BA) relative to sequence control.

8. Control processor according to claims 3 and 5, characterized in that said sequencer (SEQ) has fourth inputs conneced to said interrupt inputs (IS) of said computer control unit (CCU).

9. Control processor according to claims 4 and 5, characterized in that the outputs of said emulation instruction register (EIR) and of said status register (SR) are connected with said mapping memory (MM), and that said two registers (EIR, SR) receive at the input signal capable of enabling in a mutually exclusive way the respective outputs.

10. Equipment (EMU) for emulating a control processor according to claim 4 or 9, to be connected directly to the socket (Z) of said processor and controlled by a terminal (TERM), characterized in that it comprises:
a) an emulation controller (EC), connected to said terminal (TERM), receiving from it emulation commands and sending to the same results of said commands,
b) a discrete circuitry (ECPROC) having the structure of said control processor and receiving from said emulation controller (EC) emulation instructions through said input (EII) of said emulation instruction register (EIR), and
c) a complement circuitry (A0), receiving/sending from/to said emulation controller (EC) input/output emulation data, manifoldly and strictly connected to said discrete circuitry (ECPROC).

11. Equipment according to claim 10, and comprising a control processor as claimed in claim 9, characterized in that said pipeline register (PR) comprises at least a data subregister (SR1) and an emulation subregister (SRE), in that said complement circuitry (A0) comprises at least an emulation register (ER1) receiving at the input said emulation input data from said emulation controller (EC), and in that the outputs of an electric element (SR) interior or exterior to the processor and of said emulation register (ER1) are connected together and enabled in a mutually exclusive way by the outputs of said emulation subregister (SRE).

12. Equipment according to claim 10, characterized in that said pipeline register (PR) comprises at least a data subregister (SR2, -.., SRN) and an emulation subregister (SRE), in that said complement circuitry (A0) comprises at least an emulation register (ER2, ..., ERN) receiving at the input said emulation input data from said emulation controller (EC), and in that the outputs of said data subregister (SR2, SRN) and said emulation register (ER2, ...,ERN) are connected together and enabled, in a mutually exclusive way, by the outputs of said emulation subregister (SRE).

13. Equipment according to claim 10, characterized in that said pipeline register comprises at least a data subregister (SR1) and an emulation subregister (SRE), and in that said complement circuitry (A0) comprises an emulation multiplexer (EMUX) receiving at the input a plurality of data busses (DB) sending said emulation output data to said emulation controller (EC), and in that the selection of data to be sent is realized by said emulation multiplexer (EMUX) on the basis of the outputs of said emulation subregister (SRE).

14. Method of emulating a control processor for a system, particularly for telecommunication applications, having inputs (l) connected to first electric elements indicating the status of said system and outputs (0) connected to second electric elements able to modify the status of said system, comprising a computer control unit (CCU) having first inputs (l1) and outputs (01) respectively connected to said inputs (l) and outputs (0) of said processor, wherein said first inputs (l1) provide said computer control unit (CCU) with control instructions to be carried out by the latter, said control processor including at least an emulation instruction register (EIR), the method being characterized in that, during the normal operation of the control processor, emulation instructions are loaded in said emulation instruction register (EIR) without stopping the operation itself.

15. Method according to claim 14 wherein said processor from time to time checks the presence of emulation instructions in said register (EIR).

16. Method according to claim 14 wherein said processor is alerted of the presence of emulation instructions in said register through sending an interrupt signal.

17. Method according to claim 14 wherein said emulation instructions are interpreted and carried out by said processor in accordance with a microprogram.

## Patentansprüche

1. Steuerungsprozessor für ein System, insbesondere für Telekommunikationsanwendungen, mit Eingängen (I), die mit er-sten elektrischen Elementen, die den Status des Systems angeben, verbunden sind, und mit Ausgängen (O), die mit zweiten elektrischen Elementen, die in der Lage sind, den Status des Systems zu modifizieren, verbunden sind, **dadurch gekennzeichnet,** dass er eine Computer-Steuereinheit (CCU) mit ersten Eingängen (I1) und Ausgängen (O1) umfasst, die mit den Eingängen (I) bzw. den Ausgängen (O) des Prozessors verbunden sind, und dass die ersten Eingänge (I1) die Computer-Steuereinheit (CCU) mit Steuerbefehlen versorgen, die von letzterer auszuführen sind.

2. Steuerungsprozessor nach Anspruch 1, dadurch gekennzeichnet, dass er ferner eine arithmetische Verarbeitungseinheit (APU) mit Dateneingängen und Datenausgängen, die mit den Eingängen (I) bzw. den Ausgängen (O) des Prozessors verbunden sind, mit Steuereingängen und Steuerausgängen, die mit der Computer-Steuereinheit (CCU) verbunden sind, die von der Computer-Steuereinheit (CCU) arithmetische Verarbeitungsanweisungen erhält und dieser Einheit Informationen betreffend ihres eigenen Status zusendet, umfasst.

3. Steuerungsprozessor nach Anspruch 1, dadurch gekennzeichnet, dass er ferner einen Unterbrechungs-Controller (IC) mit Ausgängen, die mit Unterbrechungseingängen (IS) der Computer-Steuereinheit (CCU) verbunden sind, umfasst.

4. Steuerungsprozessor nach 1, dadurch gekennzeichnet, dass er ferner ein Emulations-Befehlsregister (EIR) mit einem Eingang (EII), welcher entworfen ist, um Emulationsbefehle zu empfangen, und mit Ausgängen, die mit den zweiten Eingängen (I2) der Computer-Steuereinheit (CCU) verbunden sind, umfasst, und dass die Computer-Steuereinheit (CCU) die er-sten (I1) und die zweiten (I2) Eingänge in einer gegenseitig ausschließlichen Weise aktiviert.

5. Steuerungsprozessor nach Anspruch 1, dadurch gekennzeichnet, dass die Computer-Steuereinheit umfasst:
a) ein Statusregister (SR) mit Eingängen, die mit den ersten Eingängen (I1) der Computer-Steuereinheit (CCU) verbunden sind,
b) einen Abbildungsspeicher (MM) mit Adresseingängen, die mit Ausgängen des Statusregisters (SR) verbunden sind,
c) eine Ablauf-Steuereinheit (SEQ) mit ersten Eingängen, die mit den Datenausgängen des Abbildungsspeichers (MM) verbunden sind,
d) einen Mikroprogrammspeicher (PM) mit Adresseingängen, die mit den Ausgängen der Ablauf-Steuereinheit (SEQ) verbunden sind, und
e) ein Fließband-Register (PR) mit Eingängen, die mit den Datenausgängen des Mikroprogrammspeichers (PM) verbunden sind und mit ersten Ausgängen, die mit den Ausgängen (01) der Computer-Steuereinheit (CCU) verbunden sind.

6. Steuerungsprozessor nach den Ansprüchen 2 und 5, dadurch gekennzeichnet, dass das Statusregister (SR) an dem Eingang die Steuerausgänge der arithmetischen Verarbeitungseinheit (APU) empfängt, und dass das Fließband-Register (PR) zweite Ausgänge aufweist, die mit den Steuereingängen der arithmetischen Verarbeitungseinheit (APU) verbunden sind.

7. Steuerungsprozessor nach Anspruch 5, dadurch gekennzeichnet, dass die Computer-Steuereinheit (CCU) ferner einen Testbedingungs-Multiplexer (TMUX) mit Dateneingängen, die mit den Ausgängen des Statusregisters (SR) verbunden und Wähleingängen, die mit dritten Ausgängen des Fließband-Registers (PR) verbunden sind und mit zumindest einem Ausgang, der mit zweiten Eingängen der Ablauf-Steuereinheit (SEQ) verbunden ist, umfasst, und dass die Ablauf-Steuereinheit (SEQ) dritte Eingänge umfasst, die zum Empfang von Informationen (NI, BA) bezüglich der Ablaufsteuerung mit vierten Ausgängen des Fließband-Registers (PR) verbunden sind.

8. Steuerungsprozessor nach den Ansprüchen 3 und 5, dadurch gekennzeichnet, dass die Ablauf-Steuereinheit (SEQ) vierte Eingänge aufweist, die mit den Unterbrechungseingängen (IS) der Computer-Steuereinheit (CCU) verbunden sind.

9. Steuerungsprozessor nach den Ansprüchen 4 und 5, dadurch gekennzeichnet, dass die Ausgänge des Emulations-Befehlsregisters (EIR) und des Statusregisters (SR) mit dem Abbildungsspeicher (MM) verbunden sind, und dass die zwei Register (EIR, SR) an dem Eingang ein Signal empfangen, das in der Lage ist, die jeweiligen Ausgänge in einer gegenseitig ausschließlichen Weise zu aktivieren.

10. Anlage (EMU) zum Emulieren eines Steuerungsprozessors nach den Ansprüchen 4 oder 9, die direkt mit dem Sockel (Z) des Prozessors zu verbinden und von einem Endgerät (TERM) zu steuern ist, dadurch gekennzeichnet, dass sie umfasst:
a) einen Emulations-Controller (EC), der mit dem Endgerät (TERM) verbunden ist, von diesem Emulations-Anweisungen erhält und zu diesem Ergebnisse dieser Anweisungen sendet,
b) eine diskrete Schaltung (ECPROC) mit der Struktur des Steuerungsprozessors, die von dem Emulations-Controller (EC) über den Eingang (EII) des Emulations-Befehlsregisters (EIR) Emulationsbefehle empfängt, und
c) eine Komplementärschaltung (A0), die von/an dem/den Emulations-Controller (EC) Eingangs-/Ausgangs-Emulationdaten empfängt/sendet, und die mehrfach und streng mit der diskreten Schaltung (ECPROC) verbunden ist.

11. Anlage nach Anspruch 10, die einen Steuerungsprozessor gemäß Anspruch 9 umfasst, dadurch gekennzeichnet, dass das Fließband-Register (PR) zumindest ein Daten-Unterregister (SR1) und ein Emulations-Unterregister (SRE) umfasst, dass die Komplementärschaltung (A0) zumindest ein Emulationsregister (ER1) umfasst, welches an dem Eingang die Emulations-Eingangsdaten von dem Emulations-Controller (EC) empfängt, und dass die Ausgänge eines elektrischen Elements (SR) innerhalb oder außerhalb des Prozessors und des Emulationsregisters (ER1) miteinander verbunden sind und in einer gegenseitig ausschließlichen Weise von den Ausgängen des Emulations-Unterregisters (SRE) aktiviert werden.

12. Anlage nach Anspruch 10, dadurch gekennzeichnet, dass das Fließband-Register (PR) zumindest ein Daten-Unterregister (SR2, ..., SRN) und ein Emulations-Unterregister (SRE) umfasst, dass die Komplementärschaltung (A0) zumindest ein Emulationsregister (ER2, ..., ERN) umfasst, das an dem Eingang die Emulations-Eingangsdaten von dem Emulations-Controller (EC) empfängt, und dass die Ausgänge des Daten-Unterregisters (SR2, SRN) und des Emulationsregisters (ER2, .., ERN) miteinander verbunden sind und in gegenseitig ausschließlicher Weise durch die Ausgänge des Emulations-Unterregisters (SRE) aktiviert werden.

13. Anlage nach Anspruch 10, dadurch gekennzeichnet, dass das Fließband-Register zumindest ein Daten-Unterregister (SR1) und ein Emulations-Unterregister (SRE) umfasst, und dass die Komplementärschaltung (A0) einen Emulations-Multiplexer (EMUX) umfasst, welcher an dem Eingang eine Mehrzahl von Datenbussen (DB) empfängt, die die Emulations-Ausgangsdaten zu dem Emulations-Controller (EC) senden, und dass die Wahl der zu sendenden Daten von dem Emulations-Multiplexer (EMUX) auf der Basis der Ausgänge des Emulations-Unterregisters (SRE) getroffen wird.

14. Verfahren zum Emulieren eines Steuerungsprozessors für ein System, insbesondere für Telekommunikationsanwendungen, mit Eingängen (I), die mit ersten elektrischen Elementen, welche den Status des Systems angeben, verbunden sind, und mit Ausgängen (O), die mit zweiten elektrischen Elementen, welche in der Lage sind, den Status des Systems zu modifizieren,verbunden sind, der eine Computer-Steuereinheit (CCU) mit ersten Eingängen (I1) und Ausgängen (O1) enthält, die mit den Eingängen (I) bzw. den Ausgängen (O) des Prozessors verbunden sind, wobei die ersten Eingänge (I1) die Computer-Steuereinheit (CCU) mit Steuerbefehlen versorgen, welche von der letzteren auszuführen sind, der Steuerungsprozessor zumindest ein Emulations-Befehlsregister (EIR) enthält, und das Verfahren dadurch gekennzeichnet ist, dass während des normalen Betriebs des Steuerungsprozessors Emulationsbefehle in das Emulations-Befehlsregister (EIR) geladen werden, ohne dabei den Betrieb zu beenden.

15. Verfahren nach Anspruch 14, bei dem der Prozessor von Zeit zu Zeit das Vorhandensein von Emulationsbefehlen in dem Register (EIR) überprüft.

16. Verfahren nach Anspruch 14, bei dem der Prozessor von dem Vorhandensein von Emulationsbefehlen in dem Register durch Senden eines Unterbrechungssignals benachrichtigt wird.

17. Verfahren nach Anspruch 14, bei dem die Emulationsbefehle von dem Prozessor gemäß einem Mikroprogramm interpretiert und ausgeführt werden.

## Revendications

1. Processeur de commande pour un système, en particulier pour des applications de télécommunication, avec des entrées (I) connectées à des premiers éléments électriques indiquant l'état dudit système et avec des sorties (O) connectées aux deuxièmes éléments électriques, capable de modifier l'état dudit système, caractérisé en ce qu'il comprend une unité de commande informatique (CCU) avec des premières entrées (Il) et sorties (O1) respectivement connectées auxdites entrées (I) et sorties (O) dudit processeur, et en ce que lesdites premières entrées (Il) fournissent à ladite unité de commande informatique (CCU) des instructions de commande à exécuter par cette dernière.

2. Processeur de commande selon la revendication 1, caractérisé en ce qu'il comprend en outre une unité de traitement arithmétique (APU) avec des entrées de données et des sorties de données respectivement connectées auxdites entrées (1) et sorties (O) dudit processeur, avec des entrées de commande et des sorties de commande connectées à ladite unité de commande informatique (CCU), recevant de ladite unité de commande informatique (CCU) des commandes de traitement arithmétique, et envoyant à cette même unité des informations concernant son propre état.

3. Processeur de commande selon la revendication 1, caractérisé en ce qu'il comprend en outre un contrôleur d'interruption (IC) avec des sorties connectées aux entrées d'interruption (IS) de ladite unité de commande informatique (CCU).

4. Processeur de commande selon la revendication 1, caractérisé en ce qu'il comprend en outre un registre d'instructions d'émulation (EIR), avec une entrée (EII) destinée à recevoir des instructions d'émulation, et avec des sorties connectées aux deuxièmes entrées (I2) de ladite unité de commande informatique (CCU), et en ce que ladite unité de commande informatique (CCU) active d'une façon mutuellement exclusive lesdites premières (Il) et lesdites deuxièmes (I2) entrées.

5. Processeur de commande selon la revendication 1, caractérisé en ce que ladite unité de commande informatique comprend :
a) un registre d'état (SR) avec des entrées connectées auxdites premières entrées (Il) de ladite unité de commande informatique (CCU),
b) une mémoire de topologie (MM), avec des entrées d'adresse connectées aux sorties dudit registre d'état (SR),
c) un séquenceur (SEQ), avec des premières entrées connectées aux sorties de données de ladite mémoire de topologie (MM),
d) une mémoire de microprogramme (PM), avec des entrées d'adresse connectées aux sorties dudit séquenceur (SEQ), et
e) un registre de pipeline (PR), avec des entrées connectées aux sorties de données de ladite mémoire de microprogramme (PM), et avec des premières sorties connectées auxdites sorties (01) de ladite unité de commande informatique (CCU).

6. Processeur de commande selon les revendications 2 et 5, caractérisé en ce que ledit registre d'état (SR) reçoit à l'entrée lesdites sorties de commande de ladite unité de traitement arithmétique (APU), et en ce que ledit registre de pipeline (PR) a des deuxièmes sorties connectées auxdites entrées de commande de ladite unité de traitement arithmétique (APU).

7. Processeur de commande selon la revendication 5, caractérisé en ce que ladite unité de commande informatique (CCU) comprend en outre un multiplexeur d'état de test (TMUX) avec des entrées de données connectées aux sorties dudit registre d'état (SR) et des entrées de sélection connectées aux troisièmes sorties dudit registre de pipeline (PR), et avec au moins une sortie connectée aux deuxièmes entrées dudit séquenceur (SEQ), et en ce que ledit séquenceur (SEQ) a des troisièmes entrées, connectées aux quatrièmes sorties dudit registre de pipeline (PR), pour recevoir des informations (NI, BA) concernant la commande de séquence.

8. Processeur de commande selon les revendications 3 et 5, caractérisé en ce que ledit séquenceur (SEQ) a quatre entrées connectées auxdites entrées d'interruption (IS) de ladite unité de commande informatique (CCU).

9. Processeur de commande selon les revendications 4 et 5, caractérisé en ce que les sorties dudit registre d'instructions d'émulation (EIR) et dudit registre d'état (SR) sont connectées à ladite mémoire de topologie (MM), et en ce que lesdits deux registres (EIR, SR) reçoivent au niveau de l'entrée un signal capable d'activer les sorties respectives d'une façon mutuellement exclusive.

10. Equipement (EMU) pour émuler un processeur de commande selon la revendication 4 ou 9, à connecter directement sur le support (Z) dudit processeur et commandé par un terminal (TERM), caractérisé en ce qu'il comprend :
a) un contrôleur d'émulation (EC), connecté audit terminal (TERM), recevant de celui-ci des commandes d'émulation et envoyant à celui-ci des résultats desdites commandes.
b) des circuits discrets (ECPROC) avec la structure dudit processeur de commande et recevant dudit contrôleur d'émulation (EC) des instructions d'émulation à travers ladite entrée (EII) dudit registre d'instructions d'émulation (EIR), et
c) des circuits complémentaires (A0), recevant/ envoyant dudit/audit contrôleur d'émulation (EC) des données d'émulation d'entrée/sortie, de façon multiple et strictement connectée auxdits circuits discrets (ECPROC).

11. Equipement selon la revendication 10, et comprenant un processeur de commande selon la revendication 9, caractérisé en ce que ledit registre de pipeline (PR) comprend au moins un sous-registre de données (SR1) et un sous-registre d'émulation (SRE), en ce que lesdits circuits complémentaires (A0) comprennent au moins un registre d'émulation (ER1) recevant au niveau de l'entrée lesdites données d'entrée d'émulation dudit contrôleur d'émulation (EC), et en ce que les sorties d'un élément électrique (SR) intérieur ou extérieur au processeur et dudit registre d'émulation (ER1) sont connectées ensemble et activées d'une façon mutuellement exclusive par les sorties dudit sous-registre d'émulation (SRE).

12. Equipement selon la revendication 10, caractérisé en ce que ledit registre de pipeline (PR) comprend au moins un sous-registre de données (SR2, ..., SRN) et un sous-registre d'émulation (SRE), en ce que lesdits circuits complémentaires (A0) comprennent au moins un registre d'émulation (ER2, ..., ERN) recevant au niveau de l'entrée lesdites données d'entrée d'émulation dudit contrôleur d'émulation (EC), et en ce que les sorties dudit sous-registre de données (SR2, SRN) et dudit registre d'émulation (ER2, ..., ERN) sont connectées ensemble et activées, d'une façon mutuellement exclusive, par les sorties dudit sous-registre d'émulation (SRE).

13. Equipement selon la revendication 10, caractérisé en ce que ledit registre de pipeline comprend au moins un sous-registre de données (SR1) et un sous-registre d'émulation (SRE), et en ce que lesdits circuits complémentaires (A0) comprennent un multiplexeur d'émulation (EMUX) recevant au niveau de l'entrée une pluralité de bus de données (DB) envoyant lesdites données de sortie d'émulation audit contrôleur d'émulation (EC), et en ce que la sélection des données à envoyer est effectuée par ledit multiplexeur d'émulation (EMUX) sur la base des sorties dudit sous-registre d'émulation (SRE).

14. Procédé pour émuler un processeur de commande pour un système, en particulier pour des applications de télécommunication, avec des entrées (I) connectées à des premiers éléments électriques indiquant l'état dudit système et avec des sorties (O) connectées à des deuxièmes éléments électriques, capable de modifier l'état dudit système, comprenant une unité de commande informatique (CCU) avec des premières entrées (I1) et sorties (O1), respectivement connectées auxdites entrées (I) et sorties (O) dudit processeur, dans lequel lesdites premières entrées (I1) fournissent à ladite unité de commande informatique (CCU) des instructions de commande à exécuter par cette dernière, ledit processeur de commande incluant au moins un registre d'instructions d'émulation (EIR), le procédé étant caractérisé en ce que, pendant le fonctionnement normal du processeur de commande, des instructions d'émulation sont chargées dans ledit registre d'instructions d'émulation (EIR) sans arrêter le fonctionnement proprement dit.

15. Procédé selon la revendication 14, dans lequel ledit processeur vérifie de temps en temps la présence d'instructions d'émulation dans ledit registre (EIR).

16. Procédé selon la revendication 14, dans lequel ledit processeur est averti de la présence d'instructions d'émulation dans ledit registre par l'envoi d'un signal d'interruption.

17. Procédé selon la revendication 14, dans lequel lesdites instructions d'émulation sont interprétées et exécutées par ledit processeur conformément à un microprogramme.
